# DEMANDE DE BREVET EUROPEEN

(11) **EP 4 692 620 A1**
(43) Date de publication de la demande: **11.02.2026**
(21) Numéro de dépôt: 25192313.2
(22) Date de dépôt: 29.07.2025
(51) Int. Cl.: F16L 11/08, F16L 11/112

(54) **TUYAU DE CIRCULATION DE LIQUIDE FLEXIBLE À SPIRE**

(30) Priorité: 09.08.2024 FR 2408835
(71) Demandeur: Exel Industries, 51200 Epernay (FR)
(72) Inventeur: ANDRE, Xavier, 51200 EPERNAY (FR); DENNEVAULT, Gaël, 51200 EPERNAY (FR)
(74) Mandataire: Bandpay & Greuter

(57) **Abrégé**

La présente invention vise un tuyau (1) de circulation de fluide et/ou de particules solides, flexible et de section circulaire, comprenant une gaine souple (10), tubulaire creuse, et un jonc rigide (20), ladite gaine souple (10) formant une portion cylindrique étant réalisée à partir d'un matériau polymère souple comprenant une mousse, ledit jonc rigide (20) étant caractérisé par un diamètre égal à au moins 100% de l'épaisseur de matériau polymère souple de la gaine souple (10) et au plus égal à 150% et étant enroulée en spirale au moins en partie intégrée dans la gaine souple (10) de manière à former une spirale s'étendant le long du tuyau (1).

## Description

### DOMAINE TECHNIQUE

La présente invention concerne le domaine des tuyaux et des conduites et concerne plus précisément un tuyau pour la circulation de fluides, notamment d'eau, et/ou de solides, notamment de granulés. L'invention vise en particulier un tuyau à spire rigide.

### ETAT DE LA TECHNIQUE

Les tuyaux sont des dispositifs largement utilisés dans différentes applications, notamment pour la circulation des liquides et des solides. L'eau est un des fluides pouvant être acheminés par de tels tuyaux. Les solides peuvent être des granulés, notamment des graines ou des poudres.

Les applications dans lesquelles des tuyaux sont utilisés pour acheminer des fluides et des solides sont nombreuses, allant d'applications industrielles à des applications domestiques, comme par exemple l'alimentation d'une machine agricole ou l'aspiration d'eau usée.

Dans ces applications, les propriétés importantes des tuyaux utilisés sont leur masse, leur robustesse et leur flexibilité.

La robustesse de tels tuyaux, autrement dit leur tenue mécanique, est en effet nécessaire, notamment pour permettre le transport de fluides et de granulés sous pression ou sous dépression (autrement dit dans le cas les fluides ou les granulés sont aspirés), afin de ralentir leur usure et de réduire les risques de déformation au cours de leur utilisation. Un tuyau non suffisamment robuste peut en effet se fragiliser, ce qui se traduit par un affaissement ou par la rupture du tuyau.

La flexibilité permet d'adapter le tuyau aux différentes configurations dans lesquelles un utilisateur peut vouloir l'utiliser, en intérieur ou en extérieur, et permet aussi une utilisation facilitée.

Ces deux propriétés peuvent être antagonistes, étant donné que la robustesse peut rendre le tuyau moins flexible, et la flexibilité peut rendre le tuyau plus fragile, est donc plus susceptible de se percer.

Une solution connue est de réaliser le tuyau à partir d'une épaisseur textile enserrée entre au moins deux couches de matériau polymère. Cette solution largement utilisée ne permet pas de produire des tuyaux de diamètre intérieur supérieur à 50 mm. En outre, de tels tuyaux et ne résistent pas à la dépression et s'écrasent lorsqu'un vide poussé est appliqué.

Une autre solution connue est d'utiliser un tuyau à spire rigide, dans lequel un jonc rigide ou semi-rigide est noyé et enroulée en spirale dans une matrice de polymère souple pour former la gaine polymère extérieure du tuyau. Cette conception permet d'obtenir une tenue à la dépression sous vide et permet la fabrication de tuyaux robustes dont le diamètre intérieur peut être supérieur à 50 mm. En revanche, la flexibilité de tels tuyaux est généralement limitée.

Ainsi, compte tenu de la longueur et de la section souhaitées pour certains tuyaux, en fonction des applications envisagées, il reste nécessaire d'améliorer le compromis entre tenue mécanique et flexibilité.

Il existe donc un besoin d'une solution simple et efficace permettant d'améliorer ces propriétés de tuyaux de circulation de fluide et/ou de particules solides.

### PRESENTATION DE L'INVENTION

Plus précisément, l'invention a pour objet un tuyau de circulation de fluide et/ou de particules solides, flexible et de section circulaire, comprenant une gaine souple, tubulaire creuse, et un jonc rigide, ladite gaine souple formant une portion cylindrique étant réalisée à partir d'un matériau polymère souple comprenant une mousse, ledit jonc rigide étant caractérisé par un diamètre égal à au moins 70% de l'épaisseur de matériau polymère souple comprenant une mousse de la gaine souple et étant enroulé en spirale au moins en partie intégrée dans la gaine souple de manière à former une spirale s'étendant le long du tuyau.

Le tuyau selon l'invention est ainsi résistant du fait de la présence de la spirale tout en restant flexible et en présentant une masse linéaire peu élevée. La force nécessaire pour courber le tuyau de masse linéaire faible est inférieure à celle nécessaire pour courber le tuyau plus lourd tout en conservant des caractéristiques mécaniques identiques.

De préférence, le diamètre intérieur de la gaine souple est compris entre 12 millimètres et 500 millimètres. Le diamètre intérieur correspond au diamètre nominal (DN).

Dans une forme de réalisation, le jonc rigide est caractérisé par un diamètre égal à au moins 100% de l'épaisseur de matériau polymère souple comprenant une mousse de la gaine souple et notamment au plus égal à 150% de l'épaisseur de la gaine souple.

De manière avantageuse, la gaine souple est composée d'un matériau polymère souple dont la dureté Shore avant formation de la mousse est comprise entre 50 ShA et 90 ShA.

Avantageusement encore dans cette forme de réalisation, la partie souple est composée à partir de polychlorure de vinyle (PVC). Le PVC permet ainsi d'atteindre la dureté Shore souhaitée tout en ayant des propriétés d'imperméabilité et de flexibilité intéressantes pour l'application aux tuyaux.

De préférence, la mousse de la gaine souple comprend au moins une charge minérale ou organique. Par exemple, le type de charge dans la mousse de la gaine souple peut être du dioxyde de titane (TiO2), du sulfate de baryum (BaSO4), du carbonate de calcium (CaCO3), du mica, des microbilles de verre etc. Ces charges permettent d'améliorer certaines propriétés du tuyau, en fonction de l'application finale visée.

Avantageusement, la mousse de la gaine souple présente une densité correspondant à 90% ou moins de la densité du matériau polymère souple de la gaine souple avant formation de la mousse. La mousse permet ainsi, pour un volume final de la gaine donné, d'avoir une masse de matériau polymère plus réduite, ce qui assure la légèreté du tuyau selon l'invention.

De préférence encore, la mousse de la gaine souple est formée par injection de gaz, par exemple le dioxyde de carbone ou de l'azote gazeux, ou par activation thermique d'un agent d'expansion libérant un gaz permettant la formation de la mousse, ledit agent d'expansion étant avantageusement incorporé dans la composition du matériau polymère souple de la gaine souple.

Dans une forme de réalisation, le jonc rigide est constitué d'un matériau présentant une dureté Shore comprise entre 50 ShD à 90 ShD.

De préférence dans cette forme de réalisation, le jonc rigide est formé d'un matériau thermoplastique, qui permet d'assurer la dureté du jonc rigide tout en était aisé à mettre en forme.

Avantageusement encore, le jonc rigide est formé à partir de polychlorure de vinyle.

De préférence, le jonc rigide comprend jusqu'à 40% en masse de charge minérale ou organique, de préférence jusqu'à 20% en masse, ce qui permet d'assurer la dureté du jonc ainsi que les propriétés mécaniques du jonc nécessaires pour l'application finale du tuyau.

Alternativement, le jonc rigide peut être constitué d'un matériau métallique, tel que le fer, l'acier, l'acier inoxydable, le cuivre, l'aluminium, présentant ou non un traitement de surface.

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique d'un tuyau selon l'invention ;
La figure 2 est une représentation schématique d'une vue en coupe longitudinale du tuyau selon l'invention, dans une forme de réalisation où le diamètre du jonc rigide est inférieur à l'épaisseur de la gaine souple ;
La figure 3 est une représentation schématique d'une vue en coupe longitudinale du tuyau selon l'invention, dans une forme de réalisation où le diamètre du jonc rigide est supérieur à l'épaisseur de la gaine souple et dans laquelle le jonc rigide est recouvert par la gaine souple ;
La figure 4 est un graphe représentant le rayon de courbure d'un tuyau résultant d'une force définie, pour un tuyau de l'état de l'art d'une part et pour un tuyau selon l'invention d'autre part ;
La figure 5 est une représentation schématique d'une vue en coupe longitudinale du tuyau selon l'invention, dans une forme de réalisation où le diamètre du jonc rigide est supérieur à l'épaisseur de la gaine souple et pour laquelle le jonc rigide n'est pas intégralement recouvert par la gaine souple.

Il faut noter que les figures exposent l'invention de manière détaillée pour permettre de mettre en oeuvre l'invention ; bien que non limitatives, lesdites figures servent notamment à mieux définir l'invention le cas échéant.

### DESCRIPTION DETAILLEE DE L'INVENTION

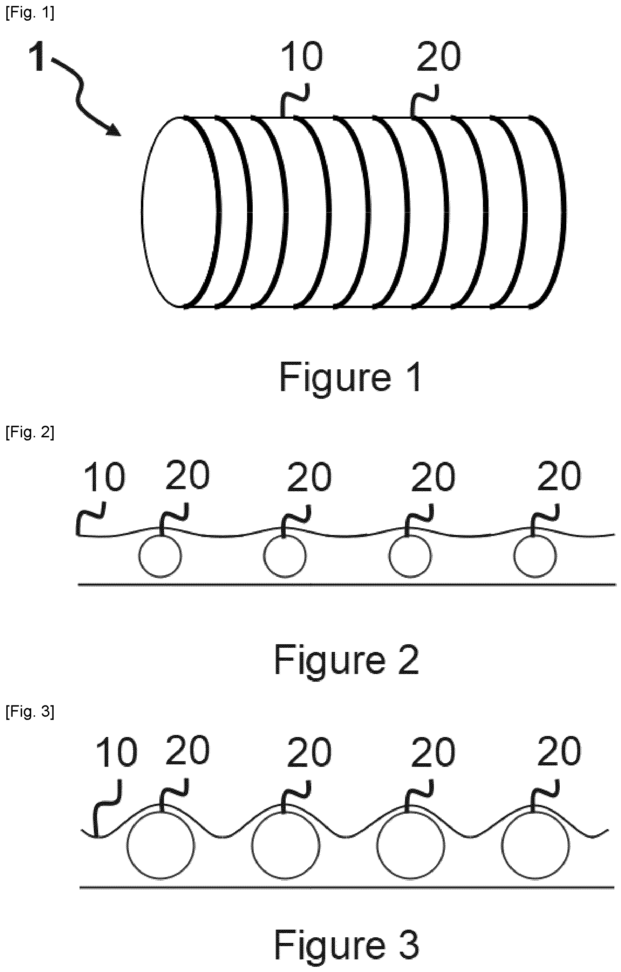

L'invention concerne un tuyau 1 comme représenté sur la figure 1.

### Tuyau 1

Comme représenté sur la figure 1, le tuyau 1 comprend une gaine souple 10 et un jonc rigide 20.

Dans la forme de réalisations représentées sur les figures, le jonc rigide 20 est comprise à l'intérieur de la gaine souple 10.

Le tuyau 1 a une forme de tube creux, caractérisé par un diamètre intérieur et un diamètre extérieur.

Le diamètre intérieur, aussi appelé diamètre nominal (DN), est le diamètre de référence pour calculer le débit de fluide et/ou de particules solides, notamment d'eau, dans le tuyau 1, lors de son utilisation.

Dans une forme de réalisation préférentielle, le diamètre intérieur du tuyau 1 est compris entre 12 millimètres et 500 millimètres, ce qui correspond respectivement à un DN 12 et à un DN 500.

### Gaine souple 10

La gaine souple 10 du tuyau 1 permet la circulation du fluide et/ou des particules solides, en particulier sans fuites.

La gaine souple 10 est réalisée à partir d'une mousse de matériau polymère dans laquelle un agent d'expansion a été incorpore, ou dans laquelle du gaz a été injecté lors de l'extrusion.

Dans la forme de réalisation dans laquelle la mousse contient un agent d'expansion, cet agent d'expansion est de préférence activé thermiquement. Dans ce cas, l'agent d'expansion libère un gaz permettant la formation de la mousse.

Le matériau polymère est de préférence du polychlorure de vinyle, plus communément appelé PVC. Pour la composition de la gaine souple, le PVC est souple et présente une dureté Shore comprise entre 50 ShA et 90 ShA avant formation de la mousse.

La mousse de matériau polymère comprend également un ou plusieurs types de charges minérales ou organiques en fonction des applications visées. Par exemple, les charges peuvent être du dioxyde de titane (TiO2), du sulfate de baryum (BaSO4), du carbonate de calcium (CaCO3), du talc, du mica, des microbilles de verre. Selon un premier mode de réalisation préféré, la charge utilisée est du carbonate de calcium. Selon un deuxième mode de réalisation préféré, la charge utilisée est du dioxyde de titane. De telles charges permettent d'obtenir un mélange correspondant à la mousse de matériau polymère chargée qui est homogène et qui présente une cohésion élevée.

Notamment, le pourcentage de charge ajoutée dans la mousse de matériau polymère peut atteindre 40% en masse. Il est de préférence inférieur ou égal à 20% en masse.

De préférence, la mousse est constituée du matériau polymère souple et de bulles formées par du relargage d'azote ou de dioxyde de carbone.

Comme indiqué précédemment, la mousse de la gaine souple 10 peut être formée par activation thermique d'un agent d'expansion libérant un gaz permettant la formation de la mousse.

La mousse de la gaine souple 10 peut ainsi présenter une densité correspondant à 90% ou moins de la densité du matériau polymère souple de la gaine souple 10 avant formation de la mousse.

### Jonc rigide 20

Comme représenté sur les figures 2 et 3, le jonc rigide 20 est enroulé dans et autour de la gaine souple 10 de façon à former une spirale.

La spirale ainsi constituée est comprise intégralement ou en partie dans la gaine souple 10.

Le diamètre du jonc rigide 20 est au moins égal à 70% de l'épaisseur de la gaine souple 10, en particulier supérieur ou égal à 100% de l'épaisseur de la gaine souple 10. Notamment, le diamètre du jonc rigide 20 est en outre inférieur ou égal à 150% de l'épaisseur de l'épaisseur de la gaine souple 10.

Dans le cas où le diamètre du jonc rigide 20 est inférieur à l'épaisseur de la gaine souple 10, le jonc rigide 20 est complètement compris dans la gaine souple 10, comme représenté sur la figure 2.

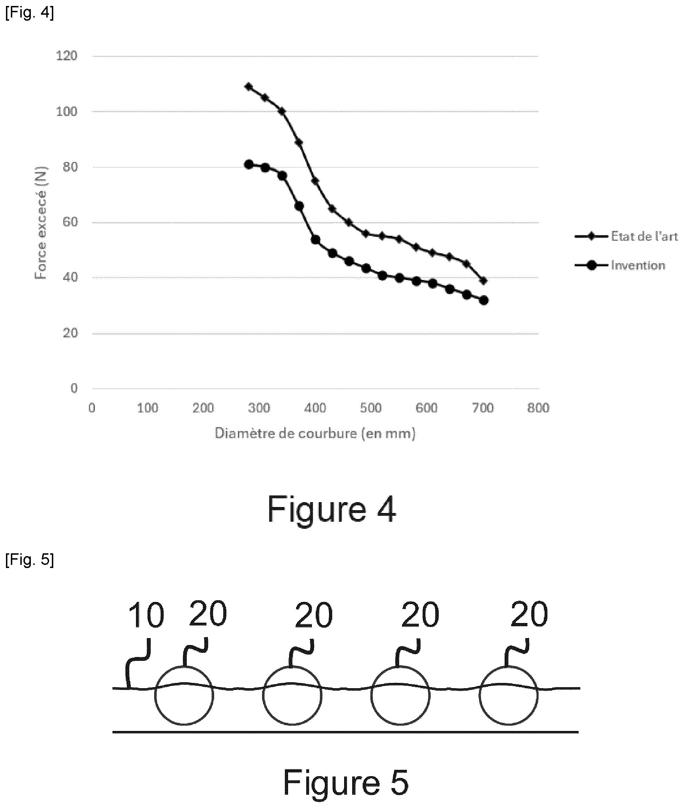

Dans le cas où le diamètre du jonc rigide 20 est supérieur à l'épaisseur de la gaine souple 10, le jonc rigide 20 crée des protubérances dans la gaine souple 10, comme représenté sur la figure 3. Ces protubérances peuvent être recouvertes, comme représenté sur la Figure 3, ou non, comme représenté par la Figure 5, par la gaine souple 10.

Dans une première forme de réalisation, le jonc rigide 20 est formé à partir d'un matériau polymère thermoplastique, tel que le PVC.

Dans une deuxième forme de réalisation, le jonc rigide est formé d'un matériau métallique, tel que l'acier galvanisé.

Avantageusement, le jonc rigide 20 est réalisé en PVC plus rigide que celui entrant dans la composition de la gaine souple 10. De préférence, la dureté Shore du jonc rigide 20 est comprise entre 50 ShD et 90 ShD.

De façon à obtenir les propriétés souhaitées du jonc rigide 20, notamment sa dureté, des charges minérales ou organiques sont ajoutées au PVC, par exemple du carbonate de calcium (CaCO3), du mica, des caoutchoucs éthylène-propylène-diène monomère (EPDM), des charges d'origine végétale etc.

Notamment, le pourcentage de charge est inférieur ou égal 40% ; il est de préférence inférieur ou égal à 20%.

De préférence, la masse du jonc rigide 20 représente de 20 à 65% de la masse totale du tuyau 1, de préférence entre 40 et 60%.

Le tuyau 1 ainsi composé peut avoir une masse linéaire de 100 g/m à 20 000 g/m, en fonction du diamètre nominal du tuyau, pour une densité de 0,9 (à +/- 0.1), ce qui représente un gain de 25% par rapport aux tuyaux existants, à caractéristiques et performances tierces équivalentes par ailleurs, en particulier, pour des diamètres intérieurs du tuyau et des pressions de liquide circulant dans les tuyaux équivalents.

Outre le diamètre, par « caractéristiques et performances équivalentes », on entend en particulier la pression de service, la pression d'éclatement et la résistance à la dépression du tuyau.

Comme représenté sur la figure 4, le tuyau 1 selon l'invention possède une meilleure flexibilité que les tuyaux de l'état de la technique, puisque pour une force appliquée égale, le rayon de courbure obtenu avec le tuyau 1 est plus petit, autrement dit le tuyau est davantage maniable et enroulable sans se rompre.

On notera par ailleurs que l'invention n'est pas limitée aux modes de réalisations décrits précédemment. Il apparaîtra en effet à l'homme du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de l'homme du métier en appliquant ses connaissances générales à la mise en oeuvre de l'enseignement qui vient de lui être divulgué.

## Revendications

1. Tuyau (1) de circulation de fluide et/ou de particules solides, flexible et de section circulaire, comprenant une gaine souple (10), tubulaire creuse, et un jonc rigide (20), ladite gaine souple (10) formant une portion cylindrique comprenant une mousse obtenue à partir d'un matériau polymère, ledit jonc rigide (20) étant **caractérisé par** un diamètre égal à au moins 100% de l'épaisseur de matériau polymère souple comprenant une mousse de la gaine souple (10) et au plus égal à 150% de ladite épaisseur, ledit jonc rigide étant enroulé en spirale au moins en partie intégrée dans la gaine souple (10) de manière à former une spirale s'étendant le long du tuyau (1).

2. Tuyau (1) selon la revendication précédente, dans lequel le diamètre intérieur de la gaine souple (10) est compris entre 12 millimètres et 500 millimètres.

3. Tuyau (1) selon l'une quelconque des revendications précédentes, dans lequel le matériau polymère souple avant formation de la mousse de la gaine souple (10) présente une dureté Shore comprise entre 50 ShA et 90 ShA.

4. Tuyau (1) selon l'une quelconque des revendications précédentes, dans lequel la mousse de la gaine souple (10) présente une densité correspondant à 90% ou moins de la densité du matériau polymère souple (10) avant formation de la mousse.

5. Tuyau (1) selon l'une quelconque des revendications précédentes, dans lequel la mousse de la gaine souple (10) est obtenue par injection de gaz dans le matériau polymère souple, tel que le dioxyde de carbone ou de l'azote gazeux, ou formée par activation thermique d'un agent d'expansion libérant un gaz dans le matériau polymère souple permettant la formation de la mousse.

6. Tuyau (1) selon l'une quelconque des revendications précédentes, dans lequel le jonc rigide (20) est formé d'un matériau polymère thermoplastique.

7. Tuyau (1) selon la revendication précédente, dans lequel le jonc rigide (20) comprend jusqu'à 40% en masse de charge minérale ou organique, de préférence jusqu'à 20% en masse.

8. Tuyau (1) selon l'une quelconque des revendications précédentes, dans lequel le jonc rigide (20) présente une dureté Shore comprise entre 50 ShD et 90 ShD.

9. Tuyau (1) selon l'une quelconque des revendications précédentes, dans lequel la tige rigide (20) est formé d'un matériau métallique.
